# EUROPEAN PATENT SPECIFICATION

(11) **EP 1 903 708 B1**
(45) Date of publication and mention of the grant of the patent: **19.04.2017**
(21) Application number: 08000263.7
(22) Date of filing: 21.10.1998
(51) Int. Cl.: H04J 14/02, H04B 10/29, H04L 1/00

(54) **Remodulators for WDM optical communication systems**
Remodulatoren für optische Mehrwellenlängen-Kommunikationssysteme
Remodulateurs pour systèmes de communication optique à multiplexage de longueurs d'ondes

(30) Priority: 21.10.1997 US 955058
(43) Date of publication of application: 26.03.2008
(62) Divisional of application: 04008323.0
(73) Proprietor: Ciena Corporation, Linthicum, MD 21090 (US)
(72) Inventor: Alexander, Stephen B., Linthicum Maryland 21090 (US); Chaddick, Steve W., Linthicum Maryland 21090 (US); Litz, Roy C., Linthicum Maryland 21090 (US); Smith, Cecil D., Linthicum Maryland 21090 (US)
(74) Representative: Ramsay, Laura Anne

(56) References cited:
- US-A- 5 504 609
- US-A- 5 715 076
- US-A- 5 784 184

## Description

The invention relates to wavelength division multiplexed optical communications generally and, more particularly, to remodulating channel selectors for selecting a particular channel wavelength and placing the information from that channel wavelength onto a newly generated optical channel.

Optical communication systems are a substantial and fast-growing constituent of communication networks. The expression "optical communication system," as used herein, relates to any system which uses optical signals to convey information across an optical waveguiding medium. Such optical systems include, but are not limited to, telecommunications systems, cable television systems, and local area networks (LANs). Optical systems are described in Gowar, Ed. Optical Communication Systems. (Prentice Hall, NY) c. 1993. Currently, the majority of optical communication systems are configured to carry an optical channel of a single wavelength over one or more optical waveguides. To convey information from plural sources, time-division multiplexing is frequently employed (TDM). In time-division multiplexing, a particular time slot is assigned to each signal source, the complete signal being constructed from the portions of the signals collected from each time slot, While this is a useful technique for carrying plural information sources on a single channel, its capacity is limited by fiber dispersion and the need to generate high peak power pulses.

While the need for communication services increases, the current capacity of existing waveguiding media is limited. Although capacity may be expanded e.g., by laying more fiber optic cables, the cost of such expansion is prohibitive. Consequently, there exists a need for a cost-effective way to increase the capacity of existing optical waveguides.

Wavelength division multiplexing (WDM) has been explored as an approach for increasing the capacity of existing fiber optic networks. In a WDM system, plural optical signal channels are carried over a single waveguide, each channel being assigned a particular wavelength. Through the use of optical amplifiers, such as doped fiber amplifiers, plural optical channels are directly amplified simultaneously, facilitating the use of WDM systems in long-distance optical networks.

To provide compatibility of WDM systems with existing networks, it is desirable to convert a signal from a received transmission wavelength from a customer to a specific channel wavelength within the WDM system. This is particularly true in WDM systems employing many channels, often referred to as "dense" WDM, where channel spacings are on the order of one nanometer or less. Such WDM systems require precise control of the optical signal wavelength for each channel in order to avoid " crosstalk," i.e., interference between adjacent channels. A WDM optical system for converting signals from received transmission wavelengths to specific channel wavelengths using optical remodulators is described in U.S. Patent 5,504,609. A WDM optical system which uses both remodulators and diverse optical sources (e.g., to accommodate signals which are generated at the proper channel wavelength or optical channels being routed from another optical path) is described in U.S. Patent No. 5,726,784.

While both the described approaches advantageously offer compatibility with existing optical communication systems, particularly those systems using SONET terminal receivers which conform to the SONET "long-haul" standard, i.e., terminals configured to detect low optical signal levels, it would be desirable to provide an output channel signal conforming to SONET "short-reach" interface standards, i.e., terminals configured to detect higher-level optical signals.

Previously, attention has been focused on conversion of a single transmission channel from a wavelength outside the wavelength band amplified by optical amplifiers to a wavelength within the wavelength band amplified by optical amplifiers and then back to the original transmission wavelength for reception by an optical receiver. U.S. Patent No. 5,267,073 describes wavelength conversion in a conventional single channel optical system to enable signal amplification by optical amplifiers. In the patent, an adapter is provided to receive a transmission optical signal having a wavelength which is outside the operating parameters of the optical amplifier. The signal is supplied to an optical-to-electronic converter module. The resultant electrical signal is output to an adjusting means comprising a laser piloting circuit for directly modulating a signal laser. The output of the signal laser is subsequently amplified by an optical amplifier. At the receive end, an adapter is provided to convert the optical signals from the amplifier into electrical signals which are fed to an adjustment module. The adjustment module comprises a laser piloting circuit which controls a laser transmitter. In this manner, the patent purports to avoid problems in which normal optical line receivers have problems with frequency response when they are coupled to optical amplifiers in optical fiber lines.

There is a need in the art for WDM channel selectors which can both select a particular channel wavelength from a multiplexed optical signal and place the information from that channel onto a newly-generated optical signal, the optical signal selected to have the desired characteristics which make it compatible with the selected terminal receiver equipment. Such channel selectors would permit the use of less expensive terminal equipment, facilitating the use of wavelength division multiplexing in a greater variety of telecommunications applications.

The present invention provides an optical communication system as defined by claim 1 and an optical remodulation method as defined by claim 8.

A remodulating selector receives a WDM input signal, selects a particular optical channel from the WDM signal, and places the information from the selected signal onto a newly-generated optical output signal. The remodulating selector typically comprises an optical input port configured to receive a wavelength division multiplexed optical communication signal from a wavelength division multiplexed optical communication system. An optical channel selector optically communicates with the optical input port to select a single optical channel from the WDM input signal. An optical-to -electrical converter optically communicates with the optical channel selector to receive the selected channel and output an electrical signal which corresponds to information from the selected optical channel. This information is placed onto an optical signal created by an optical signal emitter such as a laser or light-emitting diode (LED). When used in a WDM optical communication system with remodulators at the transmission input, the remodulating selectors provide complete control over the interfaces with optical transmitters and receivers, enabling a WDM system to interface with a broad range of optical transmitting and receiving equipment.

There is disclosed herein an optical device comprising: a photodetector circuit receiving first optical signals and outputting first serial electrical signals in response thereto, a serial-to-parallel conversion circuit coupled to the photodetector and receiving first serial electrical signals, the serial-to-parallel conversion circuit outputting first electrical signals in parallel; a forward error correction encoder circuit coupled to the serial-to-parallel conversion circuit and being configured to receive first electrical signals in parallel, the encoder circuit encoding first electrical signals in accordance with a code to generate parallel second electrical signals; a parallel-to-serial conversion circuit coupled to the forward error correction encoder circuit and receiving parallel second electrical signals, the parallel-to-serial conversion circuit outputting second electrical signals in a serial fashion; and an optical emitter coupled to the parallel-to-serial conversion circuit and receiving serial second electrical signals, the optical emitter outputting second optical signals in accordance with the second electrical signals.

Preferably, the first optical signals are at a first wavelength and the second optical signals are at a second wavelength.

Preferably, the optical device further comprises a clock and data recovery circuit coupled between the photodetector and the serial-to-parallel conversion circuit.

Preferably, the code is a Reed-Solomon code.

Further preferably, the forward error correction encoder circuit encodes the first electrical signals in a frequency domain.

There is also disclosed herein an optical device comprising: a photodetector circuit receiving first optical signals and outputting first electrical signals in response thereto; a serial-to-parallel conversion circuit coupled to the photodetector and receiving first electrical signals, the serial-to-parallel conversion circuit outputting first electrical signals in parallel; a forward error correction decoder circuit coupled to the serial-to-parallel conversion circuit and being configured to receive first electrical signals in parallel, the forward error correction decoder circuit decoding first encoded electrical signals in accordance with a code to generate parallel second electric signals; a parallel-to-serial conversion circuit coupled to the forward error correction decoder circuit and receiving second electrical signals, the parallel-to serial conversion circuit outputting second electrical signals in a serial fashion; and an optical emitter coupled to the parallel-to-serial conversion circuit and receiving serial second electrical signals, the optical emitter outputting second optical signals in accordance with the second electrical signals.

Preferably, the first optical signals are at a first wavelength and the second optical signals are at a second wavelength.

Preferably, the optical device further comprises a clock and data recovery circuit coupled between the photodetector circuit and the serial-to-parallel conversion circuit.

Preferably, the code is a Reed-Solomon code.

Further preferably, the forward error correction decoder circuit decodes the first electrical signals in a frequency domain.

There is further disclosed herein an optical device comprising: a first photodetector circuit receiving first optical signals and outputting first electrical signals in response thereto; a first serial-to-parallel conversion circuit coupled to the first photodetector and receiving electrical signals, the first serial-to-parallel conversion circuit outputting first electrical signals in parallel; a forward error correction encoder circuit coupled to the first serial-to-parallel conversion circuit and being configured to receive first electrical signals in parallel, the forward error correction encoder circuit encoding first electrical signals in accordance with a code to generate parallel second electrical signals; a first parallel-to-serial conversion circuit coupled to the forward error correction encoder circuit and receiving parallel second electrical signals, the first parallel-to-serial conversion circuit outputting second electrical signals in a serial manner; a first optical emitter coupled to the parallel-to-serial conversion circuit and receiving second electrical signals, the optical emitter configured to supply second optical signals to an optical communication path in accordance with the second electrical signals; a second photodetector circuit configured to be coupled to the optical communication path receiving second optical signals and outputting third electrical signals in response thereto; a second serial-to-parallel conversion circuit coupled to the second photodetector and receiving third optical signals, the second serial-to-parallel conversion circuit outputting third electrical signals in parallel; a forward error correction decoder circuit coupled to the second serial-to-parallel conversion circuit and being configured to receive third electrical signals in parallel, the forward error correction decoder circuit decoding the third electrical signals in accordance with the code to generate parallel fourth electrical signals; a second parallel-to serial conversion circuit coupled to the forward error correction decoder circuit and receiving fourth electrical signals, the parallel-to-serial conversion circuit outputting fourth electrical signals in a serial fashion; and a second optical emitter coupled to the parallel-to-serial conversion circuit and receiving serial fourth electrical signals, the second optical emitter outputting third optical signals in accordance with the serial fourth electrical signals.

Preferably, the first optical signals and the second optical signals are at different wavelengths.

Preferably, the second optical signals and the third optical signals are at different wavelengths.

Preferably, the optical device further comprises a first clock and data recovery circuit coupled between the first photodetector circuit and the first serial-to-parallel conversion circuit, and a second clock and data recovery circuit coupled between the second photodetector circuit and the second serial-to-parallel conversion circuit.

Preferably, the code is a Reed-Solomon code.

Further preferably, the forward error correction encoder circuit encodes the first electrical signals and the forward error correction decoder decodes the third electrical signals in a frequency domain.

There is further disclosed herein an optical communication device comprising: a plurality of encoder circuits each receiving respective electrical data signals and outputting encoded electrical signals in accordance with a Reed-Solomon code, a plurality of optical emitters, each emitting light at a respective wavelength and each coupled to a respective one of the plurality of encoder circuits, each of the optical emitters outputting optical signals in accordance with the encoded electrical signals; and an optical multiplexer coupled to each of the plurality of optical emitters, the optical multiplexer being configured to receive the optical signals from the plurality of optical emitters and supply the optical signals on an optical communication path.

According to another arrangement there is provided an optical communication device comprising: an optical demultiplexer having an input configured to be coupled to an optical communication path, the optical communication path carrying a plurality of optical channels, each at a respective wavelength, the optical demultiplexer further having a plurality of outputs, each supplying a respective one of the optical channels; a plurality of photodetectors, each respectively coupled to one of the plurality of outputs of the optical demultiplexers, each of the plurality of photodetectors generating first electrical signals in response to a respective one of the plurality of optical channels; and a plurality of forward error correction decoders, each respectively coupled to one of the plurality of photodetectors, each of the plurality of forward error correction decoders decoding first electrical signals in accordance with a Reed-Solomon code to generate second electrical signals.

According to a further arrangement there is provided an optical communication device comprising: a plurality of encoder circuits each receiving respective first electrical signals and outputting encoded second electrical signals in accordance with a Reed-Solomon code; a plurality of optical emitters, each emitting a respective one of a plurality of optical channels, each of the optical channels being at a respective wavelength, and each of the plurality of optical emitters outputting a plurality of optical channels in accordance with the encoded electrical signals; an optical multiplexer coupled to each of the plurality of optical emitters, the optical multiplexer being configured to receive optical signals from the plurality of optical emitters and supply the optical signals to an optical communication path; an optical demultiplexer having an input configured to be coupled to the optical communication path, the optical demultiplexer further having a plurality of outputs, each supplying a respective one of the optical channels; a plurality of photodetectors, each respectively coupled to one of the plurality of outputs of the optical demultiplexers, each of the plurality of photodetectors generating third electrical signals in response to the respective one of said plurality of optical channels; and a plurality of forward error correction decoders, each respectively coupled to one of the plurality of photodetectors, each of the plurality of forward error correction decoders decoding the third electrical signals in accordance with a Reed-Solomon code to generate fourth electrical signals.

### BRIEF DESCRIPTION OF DRAWINGS:

FIG. 1 schematically depicts an optical communication system employing remodulating channel selectors according to an embodiment of the present invention.
FIG. 2 schematically depicts a remodulator used in the optical communication system of FIG. 1.
FIG. 3 illustrates a block diagram of a forward error correction encoder in accordance with an embodiment of the present invention.
FIG. 4 schematically depicts a remodulating channel selector used in the optical communication system of FIG. 1.
FIG. 5 illustrates a block diagram of a forward error correction decoder in accordance with an embodiment of the present invention.

### DETAILED DESCRIPTION:

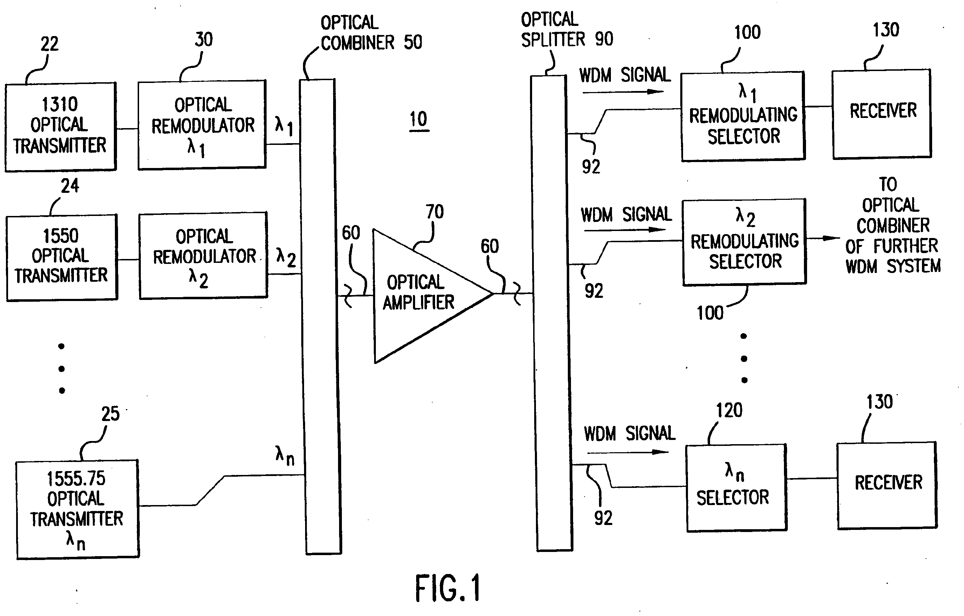

Turning to the drawings in detail in which like reference numerals indicate the same or similar elements in each of the several views, FIG. 1 depicts an optical communication system 10 according to an embodiment of the present invention. Optical communication system 10 operates to take optical transmission signals from diverse optical transmitters and other optical signal sources and map the signal sources onto a wavelength division optical communication system, i.e., a communication system in which individual optical signals correspond to optical channels within a wavelength division multiplexed optical signal carried on an optical waveguide. Optical communication system 10 includes a first set of one or more optical transmitters 22, 24, each optical transmitter emitting an information-bearing optical signal at a first transmission wavelength.

Optical transmitters 22 and 24 generally include a laser, such as a DFB semiconductor laser, and a modulator for creation of an information-bearing optical transmission signal. In an exemplary embodiment, optical transmitters 22 and 24 are SONET OC-48 transmitters. When plural optical transmitters are provided, the transmission wavelength of each transmitter can be the same or different. Because transmitters 22 and 24 may form part of an existing optical system, a wide variety of transmitters emitting in a broad range of wavelengths can be accommodated in the optical communication system of the present invention, thus ensuring compatibility with currently-deployed transmission equipment. Typical transmission elements emit wavelengths ranging from about 1300 to 1600 nm. Transmission elements in current optical communication systems and various optical modulation techniques employed therein are described in Gowar, Optical Communication Systems. In the depicted exemplary embodiment, optical transmitter 22 is a 1310 nm optical transmitter and optical transmitter 24 is a 1550 optical transmitter, commercially available from NEC, Fujitsu, Alcatel, and Nortel.

Optical communication system 10 includes a plurality of remodulators 30 for receiving the transmitted information-bearing optical signal at transmission wavelength from the first set of optical transmitters and transmitting an information-bearing optical signal at a WDM optical system channel wavelength. The expression "information - bearing optical signal," as used herein, refers to an optical signal which has been coded with information, including, but not limited to, audio signals, video signals, and computer data, generally through modulation. Similarly, the expression "non-information-bearing optical signal," as used herein, relates to a CW optical signal which has not been coded with information, e,g., an optical carrier which has not been modulated. Typically, the wavelengths emitted by the remodulators are selected to be within the 1500 nanometer range, the range in which the minimum signal attenuation occurs for silica-based fibers. More particularly, the wavelengths emitted by the remodulators are selected to be in the range from 1530 to 1560 nanometers. However, other wavelength bands may be selected according to overall system requirements.

For a 16-channel wavelength division multiplexed optical communication system, an exemplary channel plan is set forth in Table 1 below. The optical channel plan dictates both the wavelengths of the optical remodulators and the corresponding wavelengths selected by the wavelength selectors in the optical receiving systems.

**Table 1**

| **Channel Number** | **Wavelength (nm)** |
|---|---|
| 1 | 1557.36 |
| 2 | 1556.56 |
| 3 | 1555.75 |
| 4 | 1554.94 |
| 5 | 1554.13 |
| 6 | 1553.33 |
| 7 | 1552.52 |
| 8 | 1551.72 |
| 9 | 1550.92 |
| 10 | 1550.12 |
| 11 | 1549.32 |
| 12 | 1548.51 |
| 13 | 1547.72 |
| 14 | 1546.92 |
| 15 | 1546.12 |
| 16 | 1545.32 |

Wavelength division multiplexed optical communication system 10 optionally includes a second set of one or more optical transmitters 25 which directly output an optical signal having a wavelength which corresponds to an optical channel within the channel plan of the communication system, Consequently, optical transmitters 25 optically communicate with optical multiplexer or combiner 50 without the need for remodulation by remodulators 30. Optical transmitters 25 are commercially available from a variety of suppliers, including the OCT-204 series of optical transmitters from Alcatel, the HT2H-LR1H optical transmitters from Fujitsu, and the ITS-2400 optical transmitters from NEC.

Wavelength division multiplexed optical communication system 10 further optionally comprises additional sources of optical signals, e.g., optical signals from add/drop multiplexers or demultiplexers from other optical systems. Examples of various configurations of WDM optical systems with diverse signal sources are described in the parent application, incorporated by reference above.

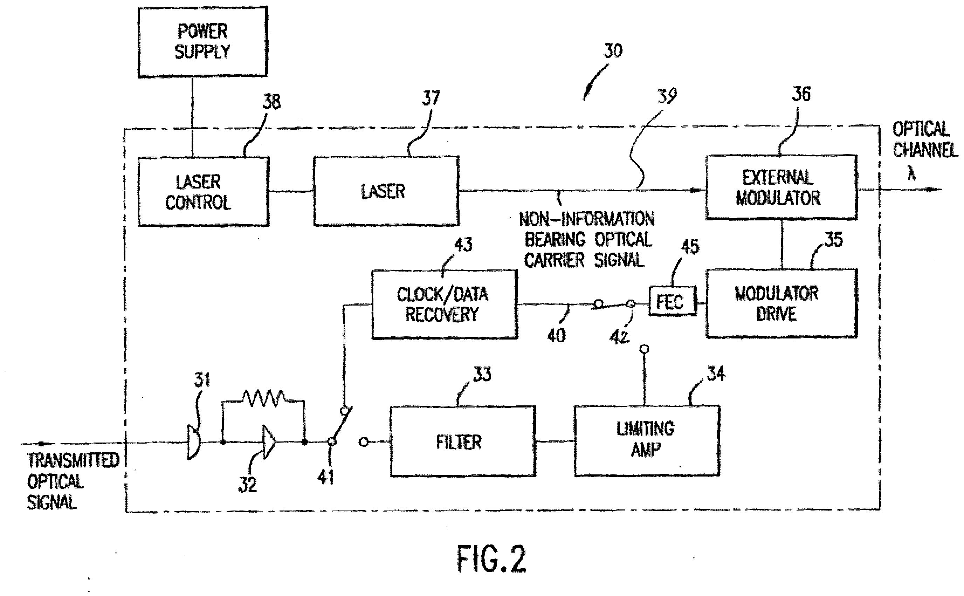

An exemplary remodulator 30 for use in optical communication system 10 is schematically depicted in FIG. 2. In remodulator 30, the transmitted optical signal is converted by electro-optical converter 31, typically a photodiode, to an electrical signal. The electrical signal is amplified by transimpedance amplifier 32, passed through filter 33 to limit the noise bandwidth and waveshape the signal, and further amplified by limiting amplifier 34. Optionally, remodulator 30 can include clock and data recovery circuit 40 for use with high data rate signals. Switch 41 automatically selects high data rate signals and passes them through clock/data recovery element 43. The selected signals are retimed, advantageously reducing jitter. The retimed signal exits clock and data recovery circuit through switch 42.

The resultant electrical signal is used to drive external modulator 36 through modulator driver 35. As used herein, the expression "external modulator" includes any modulator which acts on an optical carrier emitted from a continuous wave (CW) optical source, such as a laser. Such external modulators can be packaged with the optical source or packaged separately from the optical source.

Remodulator 30 also includes a optical source, such as laser 37, for delivering a non-information-bearing optical carrier signal to laser output waveguide 39. In an exemplary embodiment, laser 37 is a DFB semiconductor diode laser, generally comprising one or more III-V semiconductor materials, commercially available from a wide variety of suppliers such as Fujitsu, GEC Marconi, Alcatel, and Hewlett-Packard. The laser outputs an optical carrier signal at a particular channel wavelength, the wavelength corresponding to a channel selector wavelength included in the remodulating channel selector. Laser control 38 provides the required laser bias current as well as thermal control of the laser. Using thermal control, the precise operating wavelength of the laser is maintained, typically to within a one angstrom bandwidth.

External modulator 36 acts on the optical carrier signal output from laser 37, as opposed to acting on the laser itself or on a laser driver, as occurs in direct modulation systems. An exemplary external modulator employs a waveguiding medium whose refractive index changes according to the applied electrical field, i.e., a material exhibiting an electro-optic effect. Consequently, the phase of input optical carrier signals is altered as a result of the changing refractive index of the optical waveguide. A suitable electro-optic waveguiding material for the external modulators of the present invention is lithium niobate, LiNbO₃. An exemplary electro-optic modulator for use as external modulator 36 is a Mach-Zehnder interferometric modulator which provides high-speed intensity modulation of optical carriers. In the Mach-Zehnder configuration, two optical paths are provided. An incoming optical carrier is split between the two paths of the interferometer. At least one path of the interferometer is phase modulated. When the signal is recombined at the output, the light from the paths either constructively or destructively interferes, depending upon the electrical field applied to the surrounding electrodes during the travel time of the carrier, creating an amplitude-modulated output signal. Further details of electro-optic modulators are described in Becker, "Broad-Band Guided Wave Electrooptic Modulators," IEEE Journal of Quantum Electronics, Vol. QE-20, No. 7, July, 1984, pp. 723-727. Mach-Zehnder interferometers suitable for use in external electro-optic modulator 36 are commercially available from United Technologies, and IOC. The modulated output signal is the information-bearing optical channel whose wavelength corresponds to a particular channel selector wavelength in the optical communication system.

Alternatively, the external modulator employed in the remodulators of the present invention can be selected from electro-absorption external modulators. Electro-absorption modulators function by changing the bandgap of the modulating material to impart information to the optical carrier signal. Exemplary electro-absorption modulators are described in Wood, "Multiple Quantum Well (MQW) Waveguide Modulators," Journal of Lightwave Technology, Vol. 6, No. 6, June, 1988. pp. 743-757.

Optionally, remodulators 30 include forward error correction (FEC) encoders 45. The addition of forward error correction to a WDM optical communication system advantageously decreases the bit error rate (BER) by adding redundancy, e.g., coding bits, to the individual optical channels which comprise the WDM signal. In particular, the addition of FEC permits the WDM system to achieve substantially error-free performance in the presence of the nonlinearities present in optical communication system. At the receive end, a forward error correction decoder examines the coding bits to accurately reconstruct the transmitted information. A variety of coding algorithms may be used to accomplish forward error correction in the WDM optical systems of the present invention. Exemplary algorithms are convolutional encoding with threshold decoding, Viterbi decoding, or Reed-Solomon encoding/decoding. Detailed descriptions of these and other coding algorithms are found in Wiggert, Error-Control Coding and Applications (Artech House, c. 1978).

Advantageously, forward error correction in the WDM optical systems of the present invention enables a "channel trace" function that encodes the channel ID, source, and destination into a small overhead bit stream which would permit the remodulating channel selector to respond only to an incoming signal with the proper addressing. The use of channel tracing through forward error correction additionally permits channel path trace through the WDM system, a particularly useful feature for complex system topologies and WDM systems with extensive add/drop multiplexing or cross-connect features.

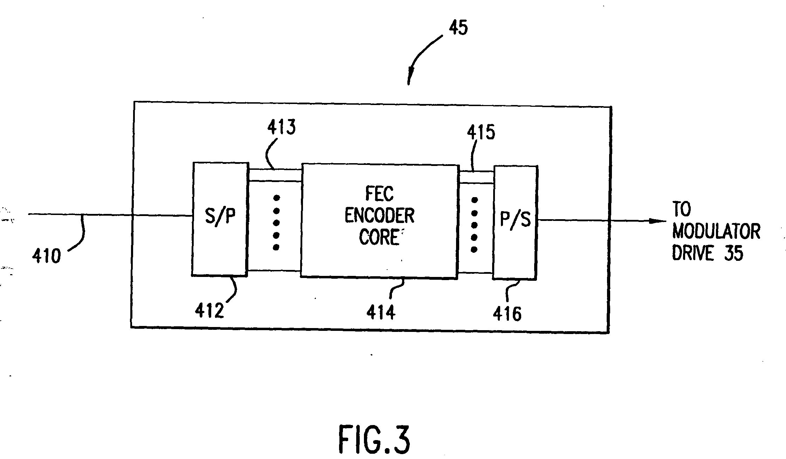

An exemplary encoder 45 is shown in greater detail in FIG. 3. Signals received from clock/data recovery circuit 43 are supplied to encoder 45 on input line 410. Serial-to-parallel converter circuit 412 converts the received serial data to parallel data. The output of serial-to-parallel converter circuit 412 is supplied on a plurality of lines 413 to FEC encoder core circuit 414, as described, for example, in U.S. Patent No. 6,308,294 "Parallel Spectral Reed-Solomon Encoder and Decoder" to Neifeld et al. FEC encoder core circuit 414 encodes the received data in parallel in accordance with a Reed-Solomon code by attaching a plurality of syndrome symbols or groupings of bits followed by an inverse Fourier transform of the data and syndromes. FEC encoder core circuit 414 outputs encoded data in parallel to parallel-to-serial converter 416, which serializes the data for output to modulator drive 35.

Returning to FIG. 1, each information-bearing optical signal produced by a remodulator constitutes a channel in optical system 10, the wavelength of which corresponds to a channel selector wavelength. The optical signal channels output from remodulators 30 are brought together in optical combiner 50 for conveyance to optical waveguide 60. Optical combiner 50 is selected from any passive optical component which can combine plural wavelengths into a single output medium. Frequency, optical splitters used to divide a signal among plural outputs are used as optical combiners, operated in reverse fashion from the splitter. Exemplary optical combiners include 1 x N passive splitters available from Corning, Inc., Corning, NY, 1 x N wideband single mode splitters available from IOT Integrierte Optik GmbH, Waghausel-Kirrlach, Germany, and fused fiber combiners available from Gould, Inc., Millersville, MD. The combination of channels forms a multiplexed optical signal which is output to waveguide 60. Optical waveguide 60 is typically a single-mode optical fiber such as SMF-28, available from Corning, and TRUEWAVE, available from AT&T Corp./Lucent Technologies, and is the principal transmission medium for the optical communication system. However, any optical waveguide which is capable of transporting multiple optical wavelengths can be employed as waveguide 60 in optical system 10.

Interposed along optical waveguide 60 arc one or more optical amplifiers 70. Optical amplifiers 70 are selected from any device which directly increases the strength of plural optical signals without the need for optical-to-electrical conversion, In general, optical amplifiers 70 are selected from optical waveguides doped with rare earth ions such as erbium, neodymium, praseodymium, ytterbium, or mixtures thereof. Optical amplifiers, their materials, and their operation are further described in Gowar, Ed. Optical Communication Systems, referenced above and in Desurvire, Erbium-Doped Fiber Amplifiers, (John Wiley & Sons, Inc., NY), c. 1994. Exemplary optical amplifier configurations are described in U.S. 5,504,609 and U.S. 5, 726,784 referenced herein. Further descriptions of doped-fiber optical amplifier configurations suitable for use in the optical communication system of the present invention are described in Bjarklev, Optical Fiber Amplifiers; Design and System Applications, (Artech House, Norwood, MA) c, 1993.

Following transmission and amplification of the multiplexed optical signals along waveguide 60, a portion of the multiplexed optical signal must be sent to each of the remodulating channel selectors for selection and routing to an appropriate optical receiver. The multiplexed signal is input to optical splitter 90 which places a portion of the multiplexed signal onto plural output paths 92. Each output path 92 optically communicates with a remodulation channel selector 100. Optical splitter 90 is selected from any optical device which can divide an input optical signal and place it onto plural output paths. Exemplary splitters include passive optical components such as those components described for use as optical combiner 50. Splitter 90 in combination with remodulating channel selectors 100 constitute an exemplary wavelength demultiplexer.

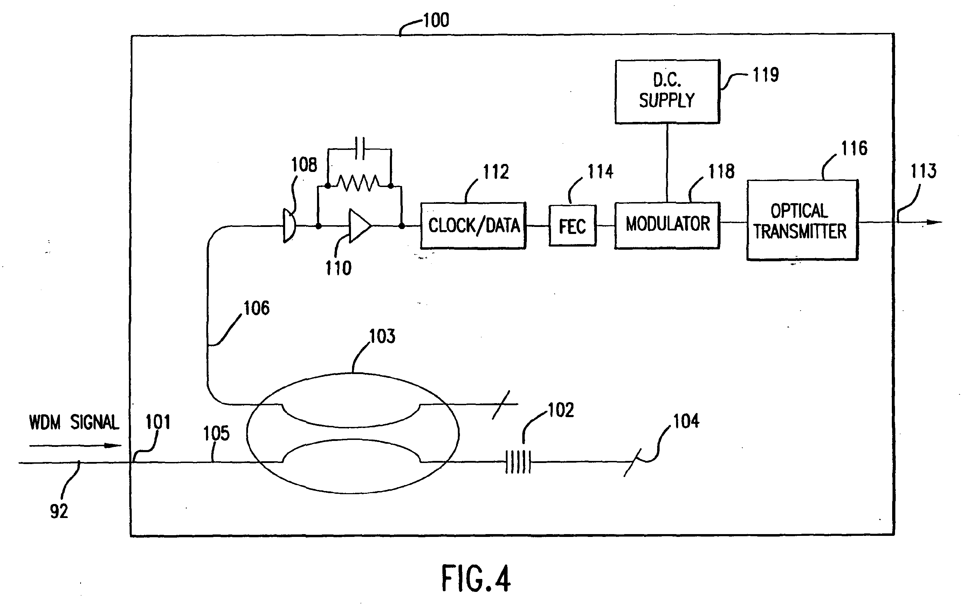

FIG. 4 schematically depicts an exemplary remodulating channel selector 100 for use in WDM optical communication system 10. Remodulating channel selector 100 includes an optical input port 101 for receiving the WDM optical signal from splitter output path 92. The WDM optical signal traverses optical path 105 through splitter 103 to channel selector 102. Channel selector 102 passes optical signals having wavelengths other than the channel wavelength to be processed by the remodulating channel selector. These non-selected channels pass through low reflectivity port 104 and exit the optical communication system. The low reflectivity port 104 may be an angled fiber cut, although any low reflectivity waveguide termination technique may be employed. The selected channel wavelength is reflected by channel selector 102 through splitter 103 onto optical path 106. In an exemplary embodiment, optical splitter 103 is a fused fiber coupler and channel selector 102 comprises a Bragg grating member configured to reflect the selected channel wavelength. Preferably, the Bragg grating comprises a series of photoinduced refractive index perturbations in an optical fiber which causes the reflection of optical signals within a selected wavelength band. Bragg gratings suitable for use in the optical system of the present invention are described in Morey et al., "Photoinduced Bragg Gratings in Optical Fibers," Optics and Photonics News, February 1994, pp. 8-14.

Although a Bragg grating is depicted as the channel selecting element, it is understood that numerous other optical components can be employed as channel selector 102. Such optical components include, but are not limited to, multilayer interference filters, tunable Fabry-Perot selectors, and wavelength routers. In an exemplary embodiment, the optical bandwidth is selected to be sufficiently narrow to minimize the deleterious effects of amplified spontaneous emission (ASE).

The selected optical channel is converted by electro-optical converter 108, typically a photodiode, to an electrical signal. The electrical signal is amplified by transimpedance amplifier 110 and routed through clock and data recovery circuit 112 for retiming. In an exemplary embodiment, the electrical bandwidth of the optical-to-electrical converter and the transimpedance amplifier is selected to match the data rate of the incoming signal. Optionally, the remodulating channel selector includes FEC decoder 114 circuit for accurate reconstruction of the transmitted signal, as discussed above.

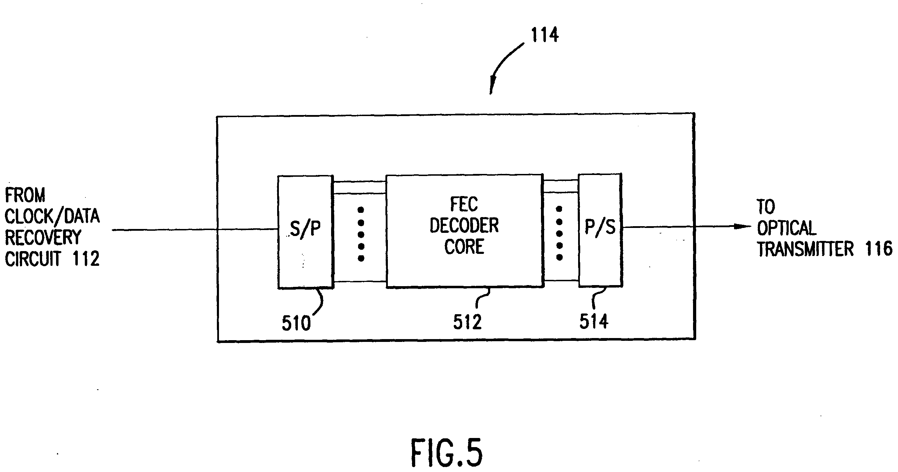

As shown in Fig. 5, FEC decoder 114 includes a serial-to-parallel converter 510, and FEC decoder core circuit 512 and a parallel-to-serial converter circuit 514. Data from clock/data recovery circuit 112 is supplied to a serial-to-parallel converter 510, which supplies a parallel output to FEC decoder core circuit 512, as described, for example, in Neifeld et al., *supra.* As further described in Neifeld et al., FEC decoder core circuit 512 includes a Fourier transform circuit, Berlekamp algorithm circuit and Recursive Extension circuit (not shown). Received data is decoded by initially performing the Fourier transform. The data is next typically supplied to both a temporary memory and the Berlekamp algorithm circuit, which acts on the data in parallel to supply a parallel output to the Recursive Extension circuit. The recursive extension circuit, also operates in parallel, to generate an error signal, which is compared with the received data stored in memory. As a result, errors which may have occurred during transmission, for example, are corrected. The resulting parallel output of FEC decoder core circuit 512 is supplied to parallel-to-serial conversion circuit 514 and passed to modulator 118. The parallel construction of FEC decoder 114, as well as FEC encoder 45 descirbed above, permits encoding and decoding of data at high speeds.

Returning to FIG. 4, direct modulation of optical transmitter 116 by way of modulator 118 will now be described. Although "modulator" 118 is depicted as a discrete device, in actuality it can consist of d.c. power supply 119 interconnected with an electronic switch. The electronic switch in turn optically communicates with the electrical signal containing the information from the selected channel output through the optical-to-electrical converter and processed by the subsequent elements. The electronic switch controls the flow of current from the d.c. supply to the optical emitter in response to the information received from the electrical signal. Alternatively, the direct modulation of the emitter can be performed using a voltage-controlled current source for the elements labeled 118 and 119 in FIG. 3. Such a current source for the optical emitter provides a current whose magnitude is directly related to the applied voltage. The applied voltage represents the information received from the optical-to electrical converter; alternatively the current may be directly derived from the modulating voltage.

Optical transmitter 116 is selected from a variety of optical devices, depending upon the optical interface required for receiver 130, When the signal emitted by the remodulating channel selector is destined for long distance transmission (e.g., through the optical combiner of a further WDM optical system as depicted in FIG. 1), the optical emitter is selected to be a DFB laser. When the signal emitted by the remodulating channel selector is destined for an adjacent receiver, the optical emitter within the optical transmitter is selected from lower-cost, shorter-range optical emitters such as Fabry-Perot lasers, light-emitting diodes, and superluminescent diodes.

If the optical signal emitted by the remodulating channel selector is destined for transmission in another WDM system, then the wavelength of the optical emitter is selected to be compatible with the channel plan of that system. For example, the optical emitter may produce an optical signal having a wavelength which corresponds to another channel from the input WDM optical signal. If the remodulating channel selectors are incorporated into a switching matrix, a variable wavelength optical emitter can be used to dynamically select an available wavelength within a WDM optical channel plan.

In an alternate embodiment (not shown) the optical signal emitter is externally modulated, e.g., as in the remodulators of FIG. 2. External modulation is particularly advantageous when the signal output by the remodulating channel selector is destined for long-distance transmission, In such an embodiment, the remodulating channel selectors can serve to reshape and retime an optical signal, e.g., an optical signal which has traversed the maximum dispersion-limited transmission distance (e.g., a distance of approximately 600 km for optical fibers such as SMF-28).

In this manner, a modulated optical signal is output by optical transmitter 116 through remodulating channel selector output port 113. The remodulating channel selector output signal is transmitted to optical receiver 130. Receiver 130 generally detects the optical signal and converts it to an electrical signal, typically through the use of a photodiode device. Various optical receivers suitable for use in optical system 10 are described in Gowar, Optical Communication Systems, discussed above. In optical communication system 10, receiver 130 will frequently be part of an existing optical communication system to which the remodulated optical signal is routed. Consequently, the optical system 10 can function with numerous types of receivers to ensure compatibility with existing optical equipment. In particular, the presence of remodulating channel selectors 100 enables the WDM optical communication system to communicate with optical receivers conforming to the SONET "short-haul" standard. Further descriptions of SONET interface standards are found in SONET Transport Systems: Common Criteria. (GR-253-CORE, Issue 1, December, 1994).

Alternatively, as depicted in FIG. 1, the output of a remodulating channel selector is conveyed to another WDM optical system or a portion of the same WDM optical system through input to an optical combiner for multiplexing with other optical signals or routing, e.g., through an add/drop multiplexer.

While the foregoing invention has been described in terms of the embodiments discussed above, numerous variations are possible. Accordingly, modifications and changes such as those suggested above, but not limited thereto, are considered to be within the scope of following claims.

## Claims

1. An optical communication system (10) comprising:
a plurality of optical remodulators (30) each for receiving an input from a respective one of a plurality of optical transmitters (22, 24, 25);
an optical combiner (50) for combining the outputs provided by each of the optical remodulators (30), the optical combiner (50) for optically communication with an optical waveguide (60), and the optical combiner (50) for combining plural optical wavelengths to form a multiplexed optical signal output;
each optical remodulator (30) configured to receive, from a respective one of the optical transmitters (22, 24, 25), an information-bearing optical signal at a transmission wavelength λ_{Ti}, where i is an integer, and output an information-bearing optical signal at a different reception wavelength λⱼ, where j is an integer, each remodulator (30) comprising:
an electro-optical converter (31) and an amplifier (32), the electro-optical converter (31) for receiving the respective information-bearing optical signal at the transmission wavelength λ_{Ti} and outputting a corresponding electrical signal which includes the information from the optical signal at the transmission wavelength λ_{Ti}, the amplifier (32) being arranged to amplify the received electrical signal;
a filter (33) arranged to waveshape the amplified electrical signal and a limiting amplifier (34) arranged to further amplify the waveshaped electrical signal;
a laser control (38) and a laser (37) for emitting a non-information-bearing optical signal at the respective reception wavelength λⱼ;
an external modulator (36) and a modulator drive (35) for driving the external modulator (36), the external modulator (36) arranged to optically communicate with an output waveguide (39) of the laser (37) for imparting information from an electrical signal input to the external modulator (36) onto the non-information-bearing optical signal; and
**characterised by** comprising:
a forward error correction (FEC) encoder (45) configured to encode the further amplified electrical signal in accordance with a forward error correction coding algorithm and output an FEC encoded signal to the modulator drive (35).

2. A system as recited in claim 1, wherein the laser control (38) is configured to maintain a precise operating wavelength for the laser (37) to within one angstrom bandwidth using thermal control.

3. A system as recited in claim 2, wherein the laser control (38) provides thermal control and a laser bias current to the laser (37).

4. A system as recited in claim 1, wherein the forward error correction coding algorithm comprises one of: convolutional encoding with threshold decoding, Viterbi decoding, and Reed-Solomon encoding/decoding.

5. A system as recited in any of claims 1 to 4, wherein the external modulator (36) is an electro-optic external modulator.

6. An optical communication system as recited in claim 5, wherein the electro-optic external modulator includes a Mach-Zehnder interferometer.

7. A system as recited in any of claims 1 to 4, wherein the external modulator (36) is an electro-absorption external modulator.

8. An optical remodulation method, comprising:
1) remodulating information-bearing optical signals at a plurality of optical remodulators (30) **characterised by**:
receiving, at each one of the plurality of optical remodulaters (30), a respective one of the information-bearing optical signals at a transmission wavelength λ_{Ti} from one respective transmitter of a plurality of transmitters (22, 24, 25);
arranging a respective electro-optical converter (31) to receive a respective information-bearing optical signal and output a corresponding electrical signal which includes the information from the respective received optical signal;
amplifying the received electrical signal;
arranging a respective filter (33) to waveshape the respective amplified electrical signal and a respective limiting amplifier (34) to further amplify the respective waveshaped electrical signal;
encoding the respective further amplified electrical signal in accordance with a forward error correction (FEC) coding algorithm using a respective forward error correction encoder (45);
arranging a respective laser control (38) and a respective laser (37) to emit a respective non-information-bearing optical signal at a respective reception wavelength λⱼ onto an output waveguide (39) of the respective laser (37);
externally modulating the respective non-information-bearing optical signal, using a respective external modulator (36) driven by a respective modulator drive (35), to impart respective information from the FEC encoded electrical signal onto the respective non-information-bearing optical signal; and
2) combining the outputs provided by the optical remodulators (30) in an optical combiner (50) to form a multiplexed optical signal output.

## Patentansprüche

1. Optisches Kommunikationssystem (10), umfassend:
eine Vielzahl von optischen Remodulatoren (30), jeder zum Empfangen eines Eingangs von einem entsprechenden von einer Vielzahl von optischen Sendern (22, 24, 25);
einen optischen Kombinator (50) zum Kombinieren der Eingänge, die von jedem der optischen Remodulatoren (30) bereitgestellt werden, der optische Kombinator (50) zur optischen Kommunikation mit einem optischen Wellenleiter (60), und der optische Kombinator (50) zum Kombinieren mehrerer optischer Wellenlängen, um einen gemultiplexten optischen Signalausgang zu bilden;
wobei jeder optische Remodulator (30) ausgebildet ist, zum Empfangen eines Informationen tragenden optischen Signals bei einer Übertragungswellenlänge λ_{Ti} von einem entsprechenden der optischen Sender (22, 24, 25), wobei i eine ganze Zahl ist, und zum Ausgeben eines Informationen tragenden optischen Signals bei einer anderen Empfangswellenlänge λⱼ, wobei j eine ganze Zahl ist, jeder Remodulator (30) umfassend:
einen elektro-optischen Umsetzer (31) und einen Verstärker (32), der elektro-optische Umsetzer (31) zum Empfangen des entsprechenden Informationen tragenden optischen Signals bei der Übertragungswellenlänge λ_{Ti} und zum Ausgeben eines entsprechenden elektrischen Signals, welches Informationen von dem optischen Signal bei der Übertragungswellenlänge λ_{Ti} enthält, wobei der Verstärker (32) angeordnet ist zum Verstärken des empfangenen elektrischen Signals;
einen Filter (33), angeordnet zum Wellenformen des verstärkten elektrischen Signals, und einen begrenzenden Verstärker (34), angeordnet zum weiteren Verstärken des wellengeformten elektrischen Signals;
eine Lasersteuerung (38) und einen Laser (37) zum Emittieren eines keine Informationen tragenden optischen Signals bei der entsprechenden Empfangswellenlänge λⱼ;
einen externen Modulator (36) und einen Modulatortreiber (35) zum Treiben des externen Modulators (36), wobei der externe Modulator (36) angeordnet ist, zum optischen Kommunizieren mit einem Ausgangswellenleiter (39) des Lasers (37) zum Aufbringen von Informationen von einem elektrischen Eingangssignal zu dem externen Modulator (36) auf das keine Informationen tragende optische Signal; und **gekennzeichnet durch** Umfassen:
eines Vorwärts-Fehlerkorrektur (FEC)-Kodierers (45), ausgebildet zum Kodieren des weiter verstärkten elektrischen Signals gemäß eines Vorwärts-Fehlerkorrektur-Kodierungsalgorithmus, und zum Ausgeben eines FEC-kodierten Signals zu dem Modulatortreiber (35).

2. System nach Anspruch 1, wobei die Lasersteuerung (38) ausgebildet ist zum Aufrechterhalten einer präzisen Betriebswellenlänge für den Laser (37) innerhalb einer Bandbreite von einem Angstrom unter Verwendung von thermischer Steuerung.

3. System nach Anspruch 2, wobei die Lasersteuerung (38) thermische Steuerung und einen Laser-Vorspannungsstrom zu dem Laser (37) bereitstellt.

4. System nach Anspruch 1, wobei der Vorwärts-Fehlerkorrektur-Kodierungsalgorithmus eines der Folgenden umfasst: Faltungskodierung mit Schwellwertdekodierung, Viterbi-Dekodierung, und Reed-Solomon-Kodierung/Dekodierung.

5. System nach einem der Ansprüche 1 bis 4, wobei der externe Modulator (36) ein elektro-optischer externer Modulator ist.

6. Optisches Kommunikationssystem nach Anspruch 5, wobei der elektro-optische externe Modulator ein Mach-Zehnder-Interferometer aufweist.

7. System nach einem der Ansprüche 1 bis 4, wobei der externe Modulator (36) ein Elektroabsorptionsmodulator ist.

8. Optischen Remodulierungsverfahren, umfassend:
1) Remodulieren von Informationen tragenden optischen Signalen an einer Vielzahl von optischen Remodulatoren (30) **gekennzeichnet durch**:
Empfangen, an jedem der Vielzahl von optischen Remodulatoren (30) ein entsprechendes von den Informationen tragenden optischen Signalen bei einer Übertragungswellenlänge λ_{Ti} von einem entsprechenden Sender von einer Vielzahl von Sendern (22, 24, 25);
Anordnen eines entsprechenden elektro-optischen Umsetzer (31) zum Empfangen eines entsprechenden Informationen tragenden optischen Signals und zum Ausgeben eines entsprechenden elektrischen Signals, welches die Informationen von dem entsprechenden empfangenen optischen Signal enthält;
Verstärken des empfangenen elektrischen Signals;
Anordnen eines entsprechenden Filters (33), zum Wellenformen des verstärkten elektrischen Signals, und eines entsprechenden begrenzenden Verstärkers (34), zum weiteren Verstärken des entsprechenden wellengeformten elektrischen Signals;
Kodieren des entsprechenden weiter verstärkten elektrischen Signals gemäß eines Vorwärts-Fehlerkorrektur (FEC)-Kodierungs-algorithmus unter Verwendung eines entsprechenden Vorwärts-Fehlerkorrektur-Kodierers (45);
Anordnen einer entsprechenden Lasersteuerung (38) und eines entsprechenden Lasers (37) zum Emittieren eines keine Informationen tragenden optischen Signals bei einer entsprechenden Empfangswellenlänge λj auf einem entsprechenden Ausgangswellenleiter (39) des entsprechenden Lasers (37);
externes Modulieren des entsprechenden keine Informationen tragenden optischen Signals, unter Verwendung eines entsprechenden externen Modulators (36), getrieben von einem entsprechenden Modulatortreiber (35), zum Aufbringen von entsprechenden Informationen von dem FEC-kodierten elektrischen Signal auf das entsprechende keine Informationen tragende optische Signal; und
2) Kombinieren die Ausgänge, bereitgestellt von den optischen Remodulatoren (30) in einem optischen Kombinator (50), um einen gemultiplexten optischen Signalausgang zu bilden.

## Revendications

1. Système de communication optique (10) comprenant :
une pluralité de remodulateurs optiques (30) chacun pour recevoir une entrée provenant d'un émetteur respectif d'une pluralité d'émetteurs optiques (22, 24, 25) ;
un circuit mélangeur optique (50) pour combiner les sorties fournies par chacun des remodulateurs optiques (30), le circuit mélangeur optique (50) servant à communiquer de façon optique avec un guide d'ondes optique (60), et le circuit mélangeur optique (50) servant à combiner plusieurs longueurs d'onde optiques pour former une sortie de signal optique multiplexée ;
chaque remodulateur optique (30) étant configuré pour recevoir, en provenance d'un des émetteurs optiques respectifs (22, 24, 25), un signal optique portant des informations à une longueur d'onde d'émission λ_{Ti}, où i est un entier, et pour sortir un signal optique portant des informations à une longueur d'onde de réception différente λⱼ, où j est un entier, chaque remodulateur (30) comprenant :
un convertisseur électro-optique (31) et un amplificateur (32), le convertisseur électro-optique (31) servant à recevoir le signal optique respectif portant des informations à la longueur d'onde d'émission λ_{Ti}, et à sortir un signal électrique correspondant qui inclut les informations provenant du signal optique à la longueur d'onde d'émission λ_{Ti}, l'amplificateur (32) étant agencé pour amplifier le signal électrique reçu;
un filtre (33) agencé pour mettre en forme d'onde le signal électrique amplifié et un amplificateur de limitation (34) agencé pour amplifier davantage le signal électrique en forme d'onde ;
une commande laser (38) et un laser (37) pour émettre un signal optique ne portant pas d'informations à la longueur d'onde de réception respective λⱼ ;
un modulateur externe (36) et un pilote de modulateur (35) pour piloter le modulateur externe (36), le modulateur externe (36) étant agencé pour communiquer de façon optique avec un guide d'ondes de sortie (39) du laser (37) pour appliquer des informations provenant d'un signal électrique entré dans le modulateur externe (36) sur le signal optique ne portant pas d'informations ; et
**caractérisé en ce qu'**il comprend :
un codeur (45) de correction d'erreurs sans voie de retour (FEC) configuré pour coder le signal électrique davantage amplifié selon un algorithme de codage à correction d'erreurs sans voie de retour et sort un signal codé FEC vers le pilote de modulateur (35).

2. Système selon la revendication 1, dans lequel la commande laser (38) est configurée pour maintenir une longueur d'onde précise de fonctionnement pour le laser (37) à l'intérieur d'une bande passante d'un angström en utilisant une commande thermique.

3. Système selon la revendication 2, dans lequel la commande laser (38) fournit une commande thermique et un courant de polarisation laser au laser (37).

4. Système selon la revendication 1, dans lequel l'algorithme de codage à correction d'erreurs sans voie de retour comprend l'un de : un codage à convolution avec décodage de seuil, un décodage de Viterbi, et un codage/décodage de Reed-Solomon.

5. Système selon l'une quelconque des revendications 1 à 4, dans lequel le modulateur externe (36) est un modulateur externe électro-optique.

6. Système de communication optique selon la revendication 5, dans lequel le modulateur externe électro-optique inclut un interféromètre de Mach-Zehnder.

7. Système selon l'une quelconque des revendications 1 à 4, dans lequel le modulateur externe (36) est un modulateur externe à électro-absorption.

8. Procédé de remodulation optique, comprenant :
1) la remodulation de signaux optiques portant des informations au niveau d'une pluralité de remodulateurs optiques (30) **caractérisée par** :
la réception, au niveau de chacun de la pluralité de remodulateurs optiques (30), d'un signal respectif des signaux optiques portant des informations à une longueur d'onde d'émission λ_{Ti}, en provenance d'un émetteur respectif d'une pluralité d'émetteurs (22, 24, 25) ;
l'agencement d'un convertisseur électro-optique respectif (31) pour recevoir un signal optique respectif portant des informations et pour sortir un signal électrique correspondant qui inclut les informations provenant du signal optique reçu respectif ;
l'amplification du signal électrique reçu ;
l'agencement d'un filtre respectif (33) pour mettre en forme d'onde le signal électrique amplifié respectif et d'un amplificateur de limitation respectif (34) pour amplifier davantage le signal électrique en forme d'onde respectif ;
le codage du signal électrique respectif davantage amplifié selon un algorithme de codage à correction d'erreurs sans voie de retour (FEC) en utilisant un codeur à correction d'erreurs sans voie de retour respectif (45) ;
l'agencement d'une commande laser respective (38) et d'un laser respectif (37) pour émettre un signal optique respectif ne portant pas d'informations à une longueur d'onde de réception respective λⱼ sur un guide d'ondes de sortie (39) du laser respectif (37) :
la modulation externe du signal optique respectif ne portant pas d'informations, en utilisant un modulateur externe respectif (36) piloté par un pilote de modulateur respectif (35), pour appliquer des informations respective du signal électrique codé FEC sur le signal optique respectif ne portant pas d'informations ; et
2) la combinaison des sorties fournies par les remodulateurs optiques (30) dans un circuit mélangeur optique (50) pour former une sortie de signal optique multiplexée.
